Europäisches Patentamt

European Patent Office

Office européen des brevets

(11) Veröffentlichungsnummer: **0 155 539**

**A1**

(12) **EUROPÄISCHE PATENTANMELDUNG**

(21) Anmeldenummer: **85102007.3**

(22) Anmeldetag: **23.02.85**

(51) Int. Cl.⁴: **B 23 B 29/00**

(30) Priorität: **20.03.84 DE 3410154**

(43) Veröffentlichungstag der Anmeldung:
**25.09.85 Patentblatt 85/39**

(84) Benannte Vertragsstaaten:
**AT CH FR GB LI**

(71) Anmelder: **Fried. Krupp Gesellschaft mit beschränkter Haftung**
**Altendorfer Strasse 103**
**D-4300 Essen 1(DE)**

(72) Erfinder: **Reiter, Norbert, Dr.-Ing.**
**Hunsrückstrasse 29**
**D-4020 Mettmann(DE)**

(72) Erfinder: **Tack, Hans**
**Schopenhauerstrasse 20**
**D-5620 Velbert 1(DE)**

(54) **Werkzeugeinrichtung mit wechselbarem Werkzeugkopf.**

(57) Der Werkzeugkopf (2) wird mit Hilfe von Stiften (35) durch eine mit einer konischen Verdickung (12) versehene Spannstange (11) mit dem Werkzeughalter (1) verspannt. Die Stange (11) ist mit einem Kolben (15) verbunden, der zwei Keilflächen (25) aufweist. Die Keilflächen (25) stehen im Eingriff mit Keilen (38, 39), die senkrecht zur Bewegungsrichtung (18) der Stange (11) und des Kolbens (15) gegensinnig bewegbar sind.

FIG.6

0155539

FRIED. KRUPP GESELLSCHAFT MIT BESCHRÄNKTER HAFTUNG
in Essen

Werkzeugeinrichtung mit wechselbarem Werkzeugkopf

Die Erfindung betrifft eine Werkzeugeinrichtung nach dem Oberbegriff des Patentanspruchs 1.

Derartige Werkzeugeinrichtungen sollen einen schnellen Austausch eines Werkzeugkopfes gegen einen anderen oder einen schnellen Wechsel der Winkellage eines Werkzeugkopfes ermöglichen.

Aus der DE-OS 30 07 440 ist eine Werkzeugeinrichtung bekannt, bei der zum Verspannen des Werkzeugkopfes eine an ihrer Spitze konisch verjüngte Schraube gegen die konische Mantelfläche eines mit der Spannstange verbundenen Kolbens drückt. Dabei besteht zwischen den beiden konischen Flächen lediglich eine Linienberührung. Bei den erforderlichen hohen Spannkräften für die Spannstange ist entweder mit einem erheblichen Verschleiß zu rechnen oder es müssen entsprechend aufwendige Werkstoffe verwendet werden. Durch die einseitige Anlage der Schraube an der Mantelfläche des Kolbens wird außerdem ein Moment auf die Teile ausgeübt, was zu einer Verkantung und damit zu einer erhöhten Reibung dieser Teile führt.

Es ist außerdem bekannt, die Spannstange mit einem Spannkolben zu versehen, der über je eine Keilfläche mit einer Zugstange in Verbindung steht, die - an der Drehung um ihre eigene Achse gehindert - über eine Gewindepaarung von einem in seiner Lage fixierten Drehkörper bewegt wird.

0155539

Bei dieser Anordnung entstehen erhebliche axiale
Reibungskräfte an dem Drehkörper und wiederum
Reibungskräfte durch Verkanten des Spannkolbens
und der Zugstange.

Der Erfindung liegt die Aufgabe zugrunde, eine
Werkzeugeinrichtung zu schaffen, bei der der
Wirkungsgrad zum Verspannen erhöht bzw. , anders
ausgedrückt, die Spannenergie vermindert wird.

Diese Aufgabe wird durch die im Patentanspruch 1
gekennzeichneten Merkmale gelöst. Durch die Anordnung
von zwei Keilflächen am Spannkolben und die Zuordnung
von zwei Spannkeilen ergibt sich für den Spannkolben
eine momentenfreie Gleitführung innerhalb des Werkzeughalters. Für das Verdrehen der Spannspindel werden
nunmehr keinerlei Druck- bzw. Zugkräfte mehr auf den
Werkzeughalter ausgeübt, so daß dadurch bedingte
Reibungskräfte vermieden werden.

Zweckmäßige Weiterbildungen der Erfindung sind in
den Unteransprüchen beschrieben. So gibt Anspruch 2
einen vorteilhaften Winkelbereich für die Keilflächen des Spannkolbens an.

Mit der Ausführung der Werkzeugeinrichtung nach
Anspruch 3 ergibt sich der Vorteil, daß die gegen
die Spannwirkung der Spannkeile gerichtete Druckfeder verhältnismäßig klein ausgebildet sein kann,
da diese lediglich das Lösen der Spannelemente bei
auseinandergezogenen Spannkeilen bewirken muß.

Mit einer nach dem Anspruch 4 ausgebildeten Werkzeugeinrichtung kann die Spannbewegung an ihrem
Anfang, wenn noch verhältnismäßig geringe Kräfte

- 3 -

auftreten, verhältnismäßig schnell erfolgen, wodurch ein beschleunigter Fertigungsablauf ermöglicht wird.

Der Gewindebolzen nach den Ansprüchen 5 und 6 stellt ein besonders einfaches Element zur Verstellung der Spannkeile dar. Durch die Ausführung des Gewindebolzens und der Spannkeile nach Anspruch 7 wird das zwischen diesen Elementen auftretende Biegemoment in vorteilhafter Weise aufgefangen.

Ausführungsbeispiele des Gegenstandes der Erfindung sind in der Zeichnung dargestellt und werden im folgenden näher erläutert. Es zeigen:

Fig. 1      eine in einem Revolverkopf eingesetzte Werkzeugeinheit im Längsschnitt,

Fig. 2      die Spannkeile und den Spannkolben des Werkzeughalters in einer nicht im Eingriff befindlichen Position im Längsschnitt,

Fig. 3      den Spannkolben und einen Spannkeil in einem Längsschnitt längs der Linie III-III in Fig. 2,

Fig. 4      den Spannweg des Spannkolbens über der Anzahl der Umdrehungen der Spannspindel in einem Diagramm,

Fig. 5      einen Spannkeil mit einer anderen Ausführungsform der Druckfläche,

Fig. 6      eine Werkzeugeinrichtung mit einem Werkzeughalter in Form einer Bohrstange, bei der die Spannspindel einen Innensechskant aufweist, und

Fig. 7          eine Bohrstange mit einer Spann-
                spindel in einer anderen Ausführungs-
                form in einem auszugsweisen Längs-
                schnitt.

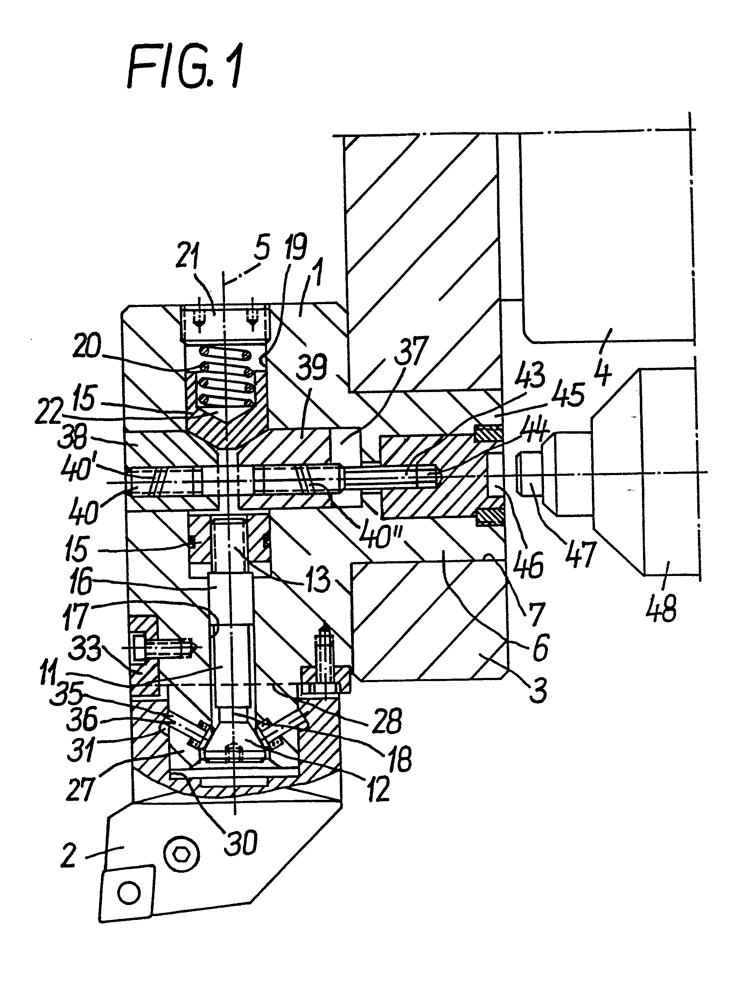

Bei dem Ausführungsbeispiel gemäß Fig. 1 weist die
Werkzeugeinrichtung einen Werkzeughalter 1 und einen
Werkzeugkopf 2 auf. Der Werkzeughalter ist mit dem
Revolverkopf 3 einer Werkzeugmaschine 4 verbunden.
Dazu ist der Werkzeughalter 2 senkrecht zu seiner
Hauptachse 5 mit einem Schaft 6 versehen, der in eine
entsprechende Ausnehmung 7 des Revolverkopfes 3 eingreift.

Innerhalb des Werkzeughalters 1 ist eine Spannstange 11
- im folgenden auch nur kurz als "Stange" bezeichnet -
angeordnet, die an ihrem dem Werkzeugkopf 2 zugewandten
Ende mit einer konischen Verdickung 12 versehen ist,
die sich in Richtung auf den Werkzeugkopf 2 hin erweitert. An ihrem von dem Werkzeugkopf 2 wegweisenden
Ende ist die Stange 11 mit einem Gewinde 13 versehen,
das in ein entsprechendes Innengewinde 14 eines Spannkolbens 15 - im folgenden auch nur kurz als "Kolben"
bezeichnet - eingreift. Die Stange 11 weist ferner
einen zylindrischen Mittelteil 16 auf, der in einer
entsprechenden Bohrung 17 im Werkzeughalter 1 gleitbar
geführt ist. Dabei ist die Hauptachse 5 des Werkzeughalters 1 mit der Mittelachse 18 der Spannstange 11
identisch.

Der Kolben 15 ist in einer hohlzylindrischen Ausnehmung 19 im Werkzeughalter 1 koaxial mit der Mittelachse 18 der Stange 11 gleitbar gelagert und wird durch
eine Druckfeder 20 in Richtung auf den Werkzeugkopf 2
gedrückt, wobei sich die Druckfeder 20 mit ihrem einen

0155539

Ende gegen eine im Werkzeughalter 1 eingeschraubte Gewindescheibe 21 abstützt und mit ihrem anderen Ende in eine Ausnehmung 22 im Spannkolben 15 eingreift. Der Kolben 15 weist eine mittige Durchgangsöffnung 23 auf, die an ihrem vom Werkzeugkopf 2 entfernteren Ende zwei Keilflächen 25 aufweist, die jeweils zu dem von dem Werkzeugkopf 2 wegweisenden Ende der Mittelachse 18 der Stange 11 einen spitzen Winkel $\alpha_3$ von etwa 65° bilden.

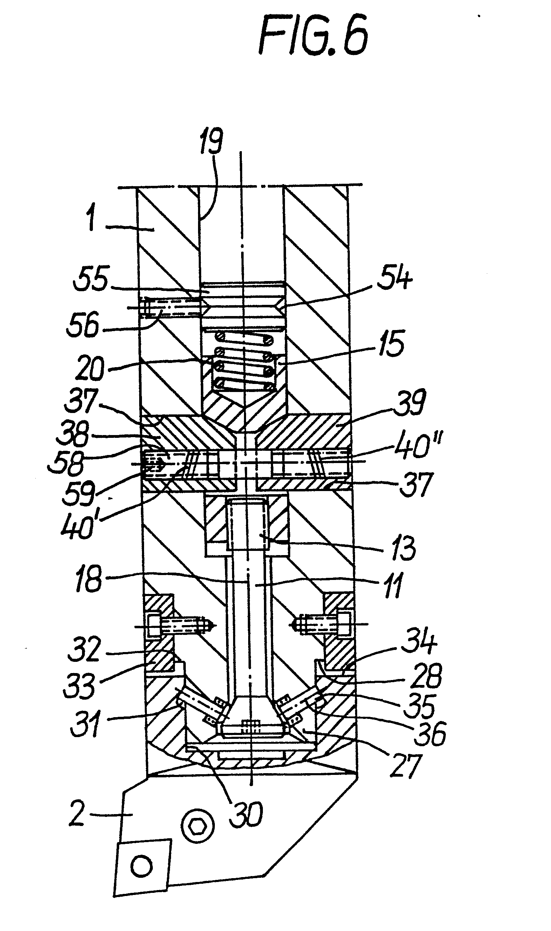

Der Werkzeughalter 1 weist ferner einen zylindrischen Aufnahmezapfen 27 mit einer ringförmigen Anlagefläche 28 auf (vgl. hierzu auch Fig. 6). Der Werkzeugkopf 2 ist mit einer entsprechenden hohlzylindrischen Ausnehmung 30 mit einer darin befindlichen Innennut 31 und mit einer entsprechenden ringförmigen Anlagefläche 32 zur axialen Fixierung des Werkzeugkopfes 2 auf dem Werkzeughalter 1 versehen. Zur Fixierung der Winkellage des Werkzeugkopfes 2 auf dem Werkzeughalter 1 ist dieser an seiner Umfangsfläche mit einer Paßfeder 33 als Führungselement versehen, das in eine entsprechende Ausnehmung 34 im Werkzeugkopf eingreift.

Senkrecht zu der jeweiligen Mantellinie der konischen Erweiterung 12 der Stange 11 sind Spannstifte 35 im Werkzeughalter 1 gelagert, die jeweils längs ihrer eigenen Längsachse 36 beweglich gelagert sind und durch (hier nicht näher dargestellte) Federn an die konische Verdickung 12 der Stange 11 angedrückt werden.

Senkrecht zu der Ausnehmung 19 für den Kolben 15 bzw. senkrecht zur Mittelachse 18 der Stange 11 weist der Werkzeughalter 1 eine Ausnehmung 37 zur Aufnahme von zwei Spannkeilen 38, 39 - im folgenden auch nur kurz als "Keil" bezeichnet - auf, die durch einen Gewindebolzen bzw. eine Gewindespindel 40 miteinander verbunden sind, wobei die Gewindespindel 40 in den einen Keil 38 mit einem Linksgewinde 40' und in den anderen Keil 39 mit einem Rechtsgewinde 40" eingreift. In einer besonderen Ausführungsform sind die Gewinde 40', 40" als Trapezgewinde ausgebildet. In ihrer Mitte ist die Gewindespindel 40 mit einem zylindrischen Abschnitt 41 versehen, der in entsprechende Paßbohrungen 42 der Keile 38, 39 eingreift. Die Gewindespindel 40 weist ferner einen profilierten Fortsatz 43 auf, der in eine entsprechend profilierte Ausnehmung 44 eines in dem Schaft 6 drehbar gelagerten Zwischenstücks 45 eingreift. An seinem anderen Ende ist das Zwischenstück 45 mit einer weiteren profilierten Ausnehmung 46 versehen, in die ein entsprechend profilierter Antriebszapfen 47 eines Hydraulikschraubers 48 eingreifen kann, der relativ zu dem Revolverkopf 3 bewegbar ist.

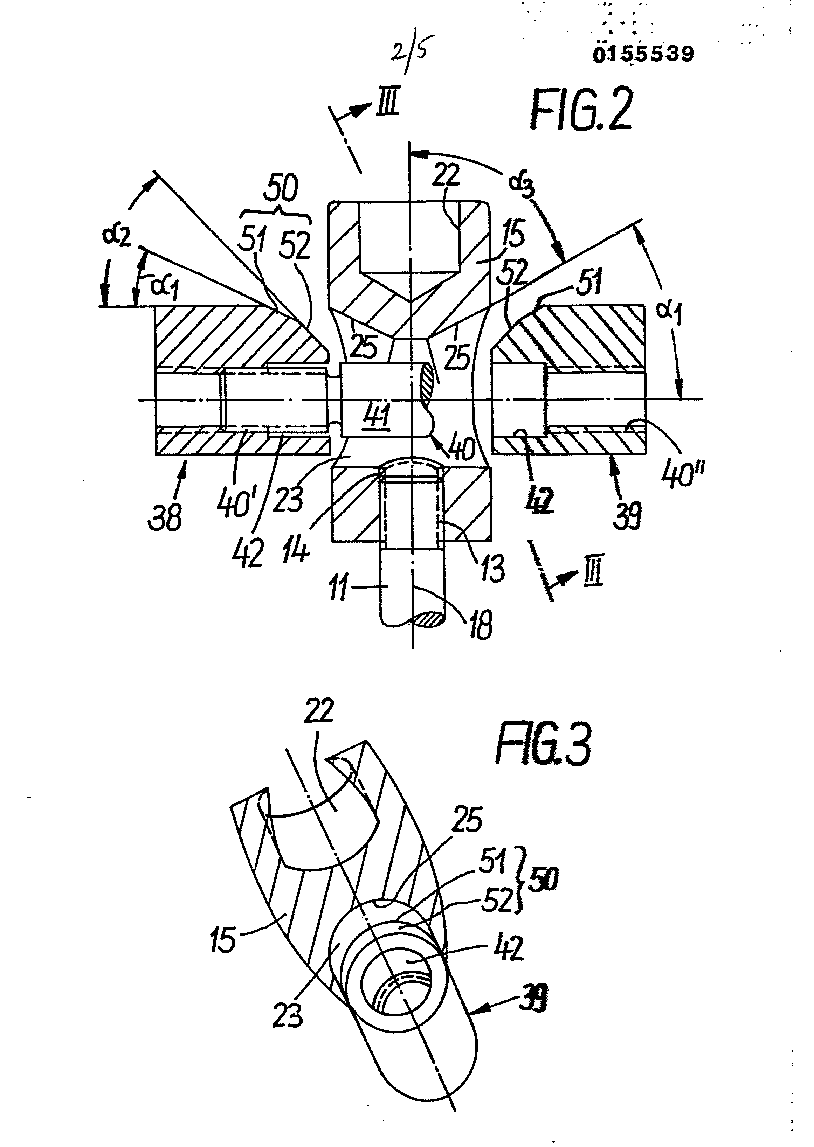

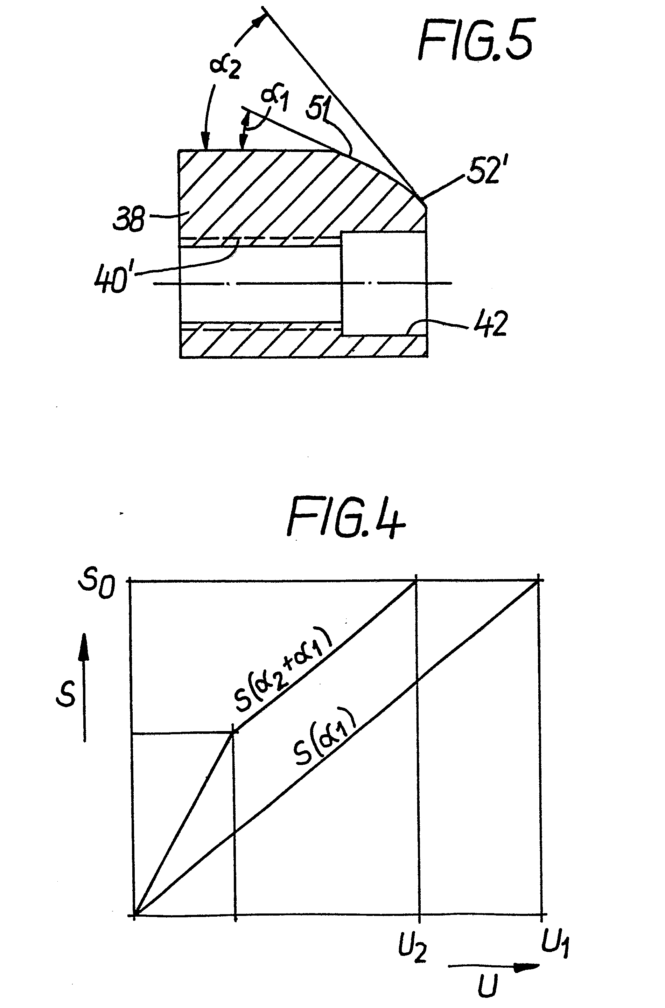

Die Spannfläche bzw. Druckfläche 50 der Keile 38, 39 weist eine erste Teilfläche 51 auf, die unter einem Winkel $\alpha_1$ gegen die Bewegungsrichtung der Keile verläuft. Der Winkel $\alpha_1$ entspricht dem Winkel $(90^{\circ} - \alpha_3)$. Diese Teilfläche 51 verläuft somit parallel zu der Keilfläche des Kolbens 15. An die Teilflächen 51 schließt sich in Richtung auf den jeweils anderen Keil, wie dies aus Fig. 2 hervorgeht, eine weitere Teilfläche 52 an, die unter einem Winkel $\alpha_2$ gegen die Bewegungsrichtung der Keile geneigt ist, der größer als der Winkel $\alpha_1$ ist. Dabei sind die Keilflächen 25 und die Teilflächen 51, 52 der Druckflächen 50 der Keile 38, 39, wie in Fig. 3 dargestellt, abgerundet ausgeführt. Es ist aber auch möglich, diese Flächen eben auszubilden.

In Fig. 4 ist zunächst in einer Geraden $s(\alpha_1)$ der Spann- oder Hubweg des Kolbens 15 bzw. der Stange 11 für den Fall dargestellt, daß die Keile 38, 39 nur eine einheitliche Druckfläche aufweisen, die jeweils parallel zu der Keilfläche 25 des Kolbens 15 verläuft. Bei einer solchen Anordnung wird ein bestimmter Hubweg $s_0$ nach $U_1$ Umdrehungen der Gewindespindel 40 erreicht. In einer weiteren, von zwei Geraden gebildeten Kurve, von denen die eine Gerade parallel zu der Geraden $s(\alpha_1)$ verläuft, ist der Spannweg s des Kolbens 15 für ein Ausführungsbeispiel dargestellt, bei dem die Druckfläche 50 der Keile 38, 39 zwei Teilflächen 51, 52 gemäß Fig. 2 aufweist. In Folge der größeren Steigung der dem jeweils anderen Keil nächstgelegenen Teilfläche 52 wird der Kolben 15 in dem Hubbereich, in dem verhältnismäßig geringe Kräfte auftreten, schneller bewegt, so daß der Vergleichsweg $s_0$ bereits nach einer gegenüber $U_1$ kleineren Anzahl $U_2$ von Umdrehung der Gewindespindel 40 erreicht wird.

Bei dem Ausführungsbeispiel gemäß Fig. 5 weist die Druckfläche 50 des Keiles 38 an seinem oberen Ende eine Teilfläche 51 auf, die wiederum unter dem Winkel $\alpha_1$ gegen die Bewegungsrichtung des Keils und damit parallel zu der Keilfläche 25 des Kolbens 15 verläuft. In ihrem vorderen bzw. tieferen Bereich geht die Druckfläche 50 kurvenmäßig in einen Flächenbereich 52' über, der unter einem gegenüber dem Winkel $\alpha_1$ größeren Winkel $\alpha_2$ gegen die Bewegungsrichtung des Keils geneigt ist.

Zum Lösen des Werkzeugkopfes 2 wird der Antriebszapfen 47 des hydraulischen Schraubers 48 in die Ausnehmung 46 des Zwischenstücks 45 gesteckt. Durch eine Rechtsdrehung werden die beiden Keile 38, 39 auseinanderbewegt, so daß sich der Kolben 15, durch die Federwirkung der Druckfeder 20 untersützt, in Richtung auf den Werkzeugkopf 2 bewegt. Damit senkt sich auch die konische Erweiterung 12 der Spannstange 11 ab, so daß sich die bisher in der Innennut 31 des Werkzeugkopfes 2 eingreifenden Spannstifte 35 in Richtung auf die Mittelachse 18 der Stange 11 zurückweichen und der Werkzeugkopf 2 von dem Werkzeughalter 1 abgezogen werden kann, um in einer anderen Winkellage wieder aufgesetzt oder durch einen anderen Werkzeugkopf ersetzt zu werden.

Bei dem erneuten Verspannen dieses oder eines anderen Werkzeugkopfes wird der Gewindespindel 40 mit dem Schrauber 48 eine Linksdrehung erteilt, so daß die Keile 38, 39 wieder aufeinander zu bewegt werden, wodurch sie den Kolben 15 und damit die Stange 11 nach oben drücken. Die konische Erweiterung der Stange 11 preßt die die Spannstifte 35 wieder in ihre äußere Lage, so daß diese in die Innennut 31 im Werkzeugkopf 2 eingreifen und diesen mit dem Werkzeughalter 1 verspannen.

In Fig. 6 ist der Werkzeughalter 1 in Form einer Bohrstange ausgebildet, bei der sich die Druckfeder 20 gegen einen mit einer Umfangsnut 54 versehenen Kolben 55 abstützt, der von mindestens einem radial im Werkzeughalter angeordneten Gewindestift 56 gehalten wird. Bei dieser Ausführungsform ist die Gewindespindel 58 an einem Ende mit einem Innensechskant 59 ausgeführt. Die Verdrehung der Gewindespindel 58 kann sowohl von Hand als auch mit einem Hydraulikschrauber erfolgen.

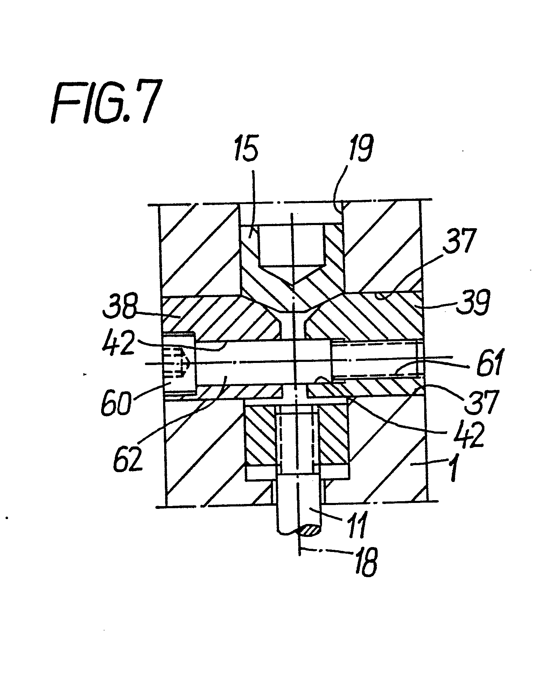

Bei dem Ausführungsbeispiel gemäß Fig. 7 ist die Spannspindel bzw. der Spannbolzen als Kopfschraube 60 ausgebildet, die lediglich an ihrem Ende ein Gewinde 61 aufweist. Mit ihrem zylindrischen Mittelteil 62 greift die Kopfschraube 60 in entsprechende Paßbohrungen 42 der Keile 38, 39 ein.

Die Erfindung ist nicht auf die beschriebenen Ausführungsbeispiele beschränkt, so kann die Verstellung der Keile 38, 39 z.B. auch hydraulisch oder pneumatisch erfolgen.

0155539

Patentansprüche

1. Werkzeugeinrichtung mit einem Werkzeughalter und einem Werkzeugkopf, wobei der Werkzeugkopf durch in eine an ihm angeordnete Ausnehmung bewegbare Spannelemente, die wiederum durch eine im Werkzeughalter gleitend geführte Spannstange betätigbar sind, lösbar mit dem Werkzeughalter verspannbar ist, d a d u r c h  g e k e n n z e i c h n e t, daß die Spannstange (11) mit einem Spannkolben (15) versehen ist, der zwei Keilflächen (25) aufweist, die symmetrisch zu der Mittelachse (18) der Spannstange (11) und jeweils unter einem spitzen Winkel ($\alpha_3$) von mindestens 45° gegen diese Mittelachse (18) angeordnet sind, wobei die Keilflächen (25) gegen die Druckflächen (50) senkrecht zur Mittelachse (18) der Spannstange (11) gegensinnig bewegbarer Spannkeile (38, 39) abstützbar sind, und die Druckfläche (50) der Spannkeile (38, 39) zumindest teilweise durch eine Fläche (51) gebildet wird, die gegen die Bewegungsrichtung der Spannkeile (38, 39) um einen Winkel ($\alpha_1$) geneigt ist, der sich aus der Differenz zwischen einem rechten Winkel und dem spitzen Winkel ($\alpha_3$) am Spannbolzen (15) ergibt.

2. Werkzeugeinrichtung nach Anspruch 1, dadurch gekennzeichnet, daß der von einer Keilfläche (25) des Spannbolzens (15) und der Mittelachse (18) der Spannstange (11) gebildete spitze Winkel ($\alpha_3$) einen Wert zwischen - jeweils einschließlich - 60° und 75° aufweist.

0155539

3. Werkzeugeinrichtung nach Anspruch 1 oder 2, dadurch gekennzeichnet, daß die Keilfächen (25) des Spannkolbens (15) unter einem spitzen Winkel ($\alpha_3$) gegen das von dem Werkzeugkopf (2) wegweisende Ende der Mittelachse (18) der Spannstange (11) angeordnet sind.

4. Werkzeugeinrichtung nach Anspruch 3, dadurch gekennzeichnet, daß die Druckfläche (50) der Keile (38, 39) an dem dem jeweils anderen Keil (38 bzw. 39) zugewandten Ende ein Flächenteil (52) einschließt, das gegen die Bewegungsrichtung der Keile (38, 39) um einen Winkel ($\alpha_2$) geneigt ist, der größer ist als die Differenz zwischen einem rechten Winkel und dem spitzen Winkel ($\alpha_3$) am Spannbolzen (15).

5. Werkzeugeinrichtung nach einem der Ansprüche 1 bis 4, dadurch gekennzeichnet, daß die Spannkeile (38, 39) über einen Gewindebolzen (40; 58; 60) miteinander verbunden sind.

6. Werkzeugeinrichtung nach Anspruch 5, dadurch gekennzeichnet, daß der Gewindebolzen (40, 58) zwei mit jeweils einem Spannkeil (38, 39) in Eingriff stehende Gewindeteile (40', 40") mit gegensinniger Gewindesteigung aufweist.

7. Werkzeugeinrichtung nach Anspruch 6, dadurch gekennzeichnet, daß der Gewindebolzen (40) zwischen den Gewindeteilen (40', 40") mit einem zylindrischen Teilstück (41) versehen ist, das zum Eingriff in entsprechende Paßbohrungen (42) in den Keilen (38, 39) vorgesehen ist.

FIG.1

0155539

1/5

0155539

**FIG.2**

**FIG.3**

0155539

## FIG.5

$\alpha_2$

$\alpha_1$

51

52'

38

40'

42

## FIG.4

$S_0$

$S$

$S(\alpha_2 + \alpha_1)$

$S(\alpha_1)$

$U_2$

$U_1$

$U$

# FIG.6

0155539

FIG.7

0155539

**EUROPÄISCHER RECHERCHENBERICHT**

Nummer der Anmeldung

Europäisches Patentamt

| | **EINSCHLÄGIGE DOKUMENTE** | | | EP 85102007.3 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl 4) |
| D,A | DE - A1 - 3 007 440 (KRUPP)<br>* Fig. 1-3 *<br>-- | | 1 | B 23 B 29/00 |
| A | GB - A - 1 219 304 (VALERON)<br>* Gesamt *<br>-- | | 1 | |
| A | GB - A - 2 094 191 (KOMET)<br>* Gesamt *<br>-- | | 1 | |
| A | DE - A1 - 3 227 345 (GÖLTENBODT)<br>* Fig. 1 *<br>---- | | 5-7 | |
| | | | | **RECHERCHIERTE SACHGEBIETE (Int. Cl.4)**<br><br>B 23 B 29/00<br>B 23 Q 3/00 |
| Der vorliegende Recherchenbericht wurde für alle Patentansprüche erstellt. | | | | |

| Recherchenort | Abschlußdatum der Recherche | Prüfer |
|---|---|---|
| WIEN | 30-05-1985 | FUCHS |